# EUROPEAN PATENT APPLICATION

(11) **EP 4 652 841 A1**
(43) Date of publication of application: **26.11.2025**
(21) Application number: 24744604.0
(22) Date of filing: 15.01.2024
(51) Int. Cl.: A01N 37/36, A01M 17/00, A01N 37/42, A01N 37/44, A01N 43/08, A01N 43/50, A01N 43/78, A01N 45/02, A01N 59/02, A01N 59/06, A01N 59/16, A01N 65/08, A01N 65/38, A01P 5/00

(54) **SUBSTANCE (HATCHING ACCELERATOR) ACCELERATING HATCHING OF CYST NEMATODES**

(30) Priority: 16.01.2023 JP 2023004655
(71) Applicant: Hirotsu Bio Science Inc., Tokyo 102-0094 (JP)
(72) Inventor: YOKOTA, Shigefumi, Tokyo 102-0094 (JP); TANIMOTO, Ren, Tokyo 102-0094 (JP)
(74) Representative: Hoffmann Eitle
(86) International application number: PCT/JP2024/000726
(87) International publication number: WO 2024/154681

(57) **Abstract**

The present disclosure provides a substance for promoting the hatching of cyst nematodes (hatching-promoting substance). The hatching-promoting substance may be advantageously used, for example, to prevent damage to crops caused by cyst nematodes, by inducing hatching of cyst nematodes in soil in the absence of host plants, thereby causing the hatched nematodes to die from starvation.

## Description

### TECHNICAL FIELD

The present disclosure relates to a hatching-promoting substance that promotes the hatching of cyst nematodes. The present disclosure also relates to a test method for a hatching-promoting substance using eggs of the cyst nematodes.

### BACKGROUND ART

Cyst nematodes can survive in soil for several years to up to ten years. They hatch in response to the presence of host plants and parasitize such plants, causing damage to the plants. Female nematodes die while enclosing hundreds of eggs, and their bodies form cysts. The cysts exhibit resistance to chemicals, temperature, and desiccation, thereby protecting the eggs from external environment. Cysts are also resistant to pesticides and crop rotation has limited effectiveness, making eradication difficult.

If hatching of cyst nematodes is promoted in the absence of host plants, the nematodes are unable to feed after hatching and are thought to die of starvation. Therefore, the development of hatching-promoting substances targeting nematodes has been pursued for the purpose of eradicating cyst nematodes. The potato cyst nematode hatches in response to solanoeclepin A, a hatching-promoting substance secreted by potatoes. However, total synthesis of solanoeclepin A is difficult (Non-Patent Document 1). Patent Document 1 discloses that hatching stimulants for nematodes originate from the respective host plants infected by different types of cyst nematodes.

### PRIOR ART DOCUMENTS

### PATENT DOCUMENT

[Patent Document 1] JP2021-036984A

### NON-PATENT DOCUMENT

[Non-Patent Document 1] Tanino K. et al., Nature Chemistry, 3, 484-488 (2011)

### SUMMARY OF THE INVENTION

The present disclosure provides a substance for promoting the hatching of cyst nematodes (hatching-promoting substance). The present disclosure also provides a test method for a hatching-promoting substance using eggs of the cyst nematodes.

The present disclosure is not particularly limited thereto, but for example, the following inventions may be provided.
(1) A method for promoting hatching of nematodes, comprising:
   contacting an effective concentration of a hatching-promoting substance with eggs of the nematodes (or with cysts when the nematodes form cysts),
   wherein the hatching-promoting substance comprises one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.
(2) The method according to (1) above,
   wherein the hatching-promoting substance comprises a metal ion,
   and the metal ion is one or more selected from the group consisting of ferric ion and zinc ion.
(3) The method according to (1) above,
   wherein the hatching-promoting substance comprises a chelated metal,
   and the chelated metal is one or more selected from the group consisting of chelated iron and chelated zinc.
(4) The method according to (1) above,
   wherein the hatching-promoting substance comprises a plant extract, and the plant extract is one or more selected from the group consisting of tobacco extract, chili pepper extract, black pepper extract, beet pulp extract, and tomato leaf extract.
(5) The method according to (1) above,
   wherein the hatching-promoting substance comprises an alkaline earth metal, and the alkaline earth metal includes calcium ion.
(6) The method according to (1) above,
   wherein the hatching-promoting substance comprises a neurotransmission-related compound, and the neurotransmission-related compound includes α-chaconine.
(7) The method according to (1) above,
   wherein the hatching-promoting substance comprises a metabolism-regulating factor, and the metabolism-regulating factor is one or more selected from the group consisting of 5-aminoimidazole-4-carboxamide ribonucleotide (AICAR), 5-aminolevulinic acid, vitamin C, citric acid, α-ketoglutaric acid, and vitamin B1.
(8) The method according to (1) above,
   wherein the hatching-promoting substance comprises an amino acid, and the amino acid is an acidic amino acid.
(9) The method according to (1) above,
   wherein the hatching-promoting substance comprises a sulfur compound, and the sulfur compound includes halotrichite.
(10) A composition for use in promoting hatching of cyst nematodes, comprising one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.
(11) A method for improving the hatching efficiency of cyst nematodes, comprising permeating water from outside into cysts containing eggs of cyst nematodes.
(12) A method for promoting hatching of cyst nematodes, comprising:
   permeating moisture into cysts of cyst nematodes, and
   contacting eggs of the cyst nematodes, which are isolated from said cysts, with an effective concentration of a hatching-promoting substance,
   wherein the hatching-promoting substance comprises one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.
(13) A method for screening a substance for promoting hatching of cyst nematodes, comprising:
   contacting a test substance with eggs of cyst nematodes, which are isolated from cysts into which moisture has been permeated, and
   selecting a test substance that promotes hatching of nematodes from eggs in comparison to a negative control.
(14) Nematode eggs in a hatching-prone state, obtained from cysts into which water has been permeated from the outside and isolated from the cysts.

### BRIEF DESCRIPTION OF THE DRAWINGS

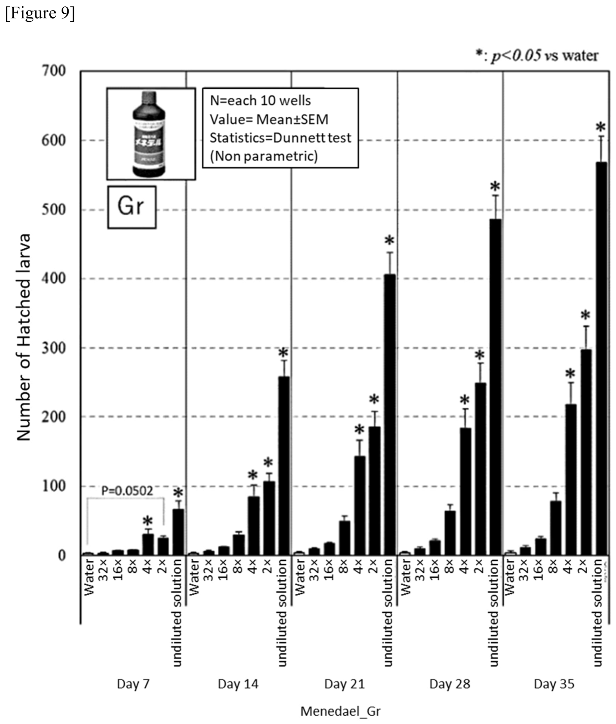

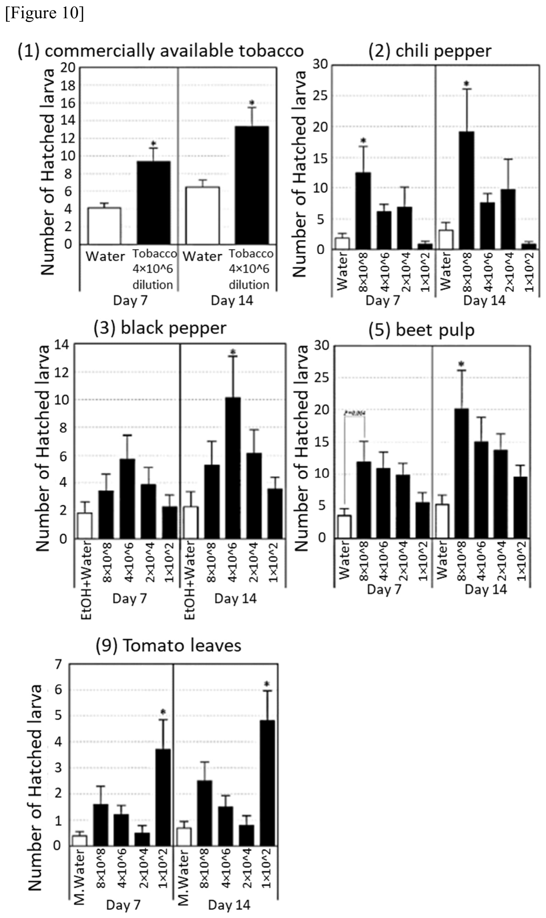

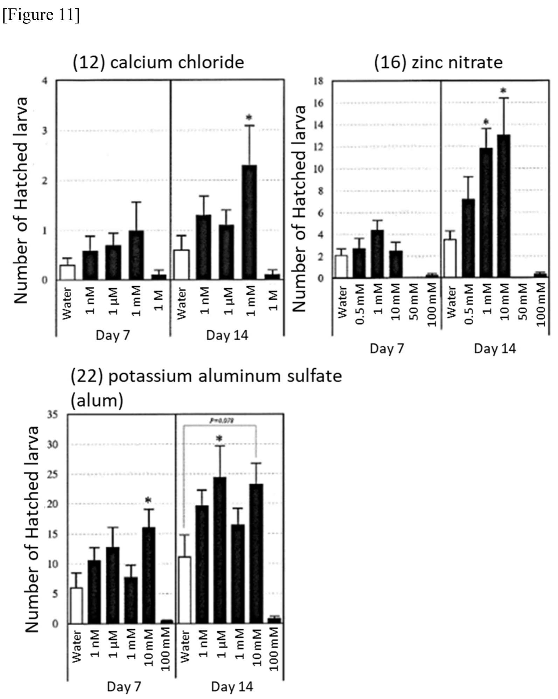

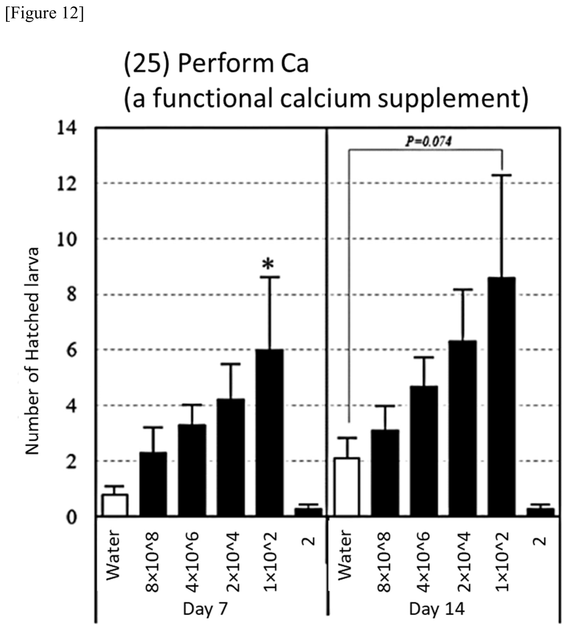

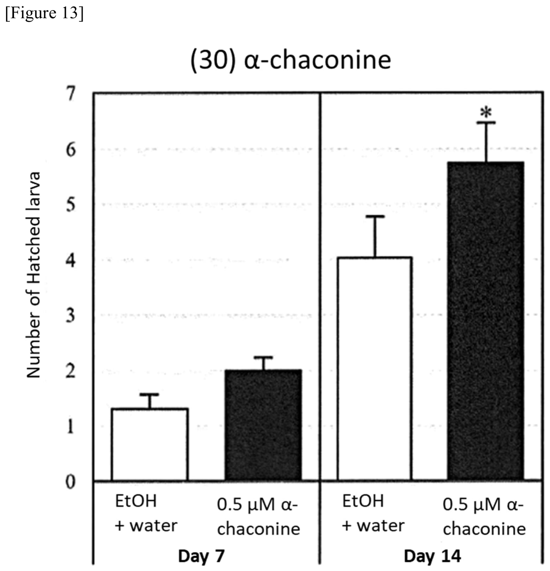

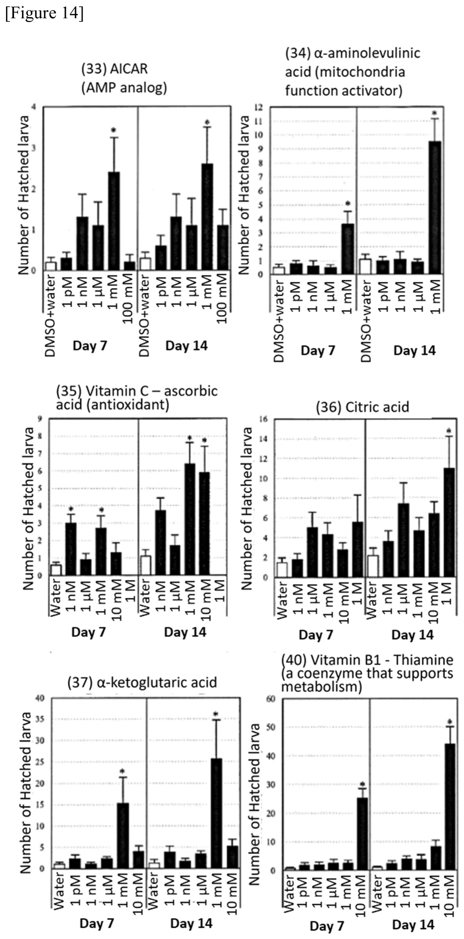

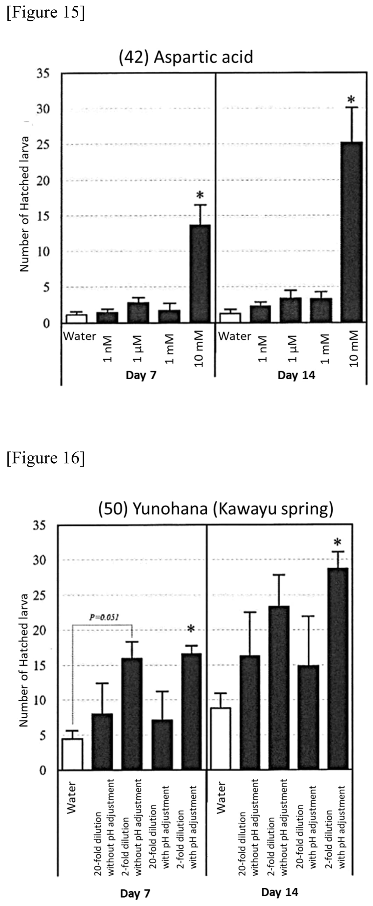

[Figure 1] Figure 1 shows the number of hatched larvae after immersion of moisturized Gp cysts in an aqueous zinc sulfate solution. In Figures 1 to 16, * indicates p < 0.05 versus water.
[Figure 2] Figure 2 shows the number of hatched larvae after immersion of dried Gp cysts in an aqueous zinc sulfate solution.
[Figure 3] Figure 3 shows the number of hatched larvae after immersion of Gr cysts in an aqueous zinc sulfate solution.
[Figure 4] Figure 4 shows the number of hatched larvae after immersion of Gp cysts in an aqueous zinc chloride solution.
[Figure 5] Figure 5 shows the number of hatched larvae after immersion of Gr cysts in an aqueous zinc chloride solution.
[Figure 6] Figure 6 shows the number of hatched larvae after immersion of Gp cysts in an aqueous ferric sulfate solution.
[Figure 7] Figure 7 shows the number of hatched larvae after immersion of Gr cysts in an aqueous ferric sulfate solution.
[Figure 8] Figure 8 shows the number of hatched larvae after immersion of Gp cysts in a plant vitality agent "Menedael" (registered trademark) containing ferric citrate.
[Figure 9] Figure 9 shows the number of hatched larvae after immersion of Gr cysts in a plant vitality agent "Menedael" (registered trademark) containing ferric citrate.
[Figure 10] Figure 10 shows the number of hatched larvae after immersion of Gp cysts in aqueous solutions containing various extracts.
[Figure 11] Figure 11 shows the number of hatched larvae after immersion of Gp cysts in aqueous solutions of calcium chloride, zinc nitrate, or alum.
[Figure 12] Figure 12 shows the number of hatched larvae after immersion of Gp cysts in an aqueous solution containing "Perform Ca" (registered trademark), which includes a calcium chelating agent.
[Figure 13] Figure 13 shows the number of hatched larvae after immersion of Gp cysts in an aqueous solution containing α-chaconine.
[Figure 14] Figure 14 shows the number of hatched larvae after immersion of Gp cysts in aqueous solutions containing various metabolism-regulating factors (5-aminoimidazole-4-carboxamide ribonucleotide (AICAR), 5-aminolevulinic acid, vitamin C, citric acid, α-ketoglutaric acid, or vitamin B1).
[Figure 15] Figure 15 shows the number of hatched larvae after immersion of Gp cysts in an aqueous solution containing aspartic acid.
[Figure 16] Figure 16 shows the number of hatched larvae after immersion of Gp cysts in an aqueous solution containing yunohana.
[Figure 17] Figure 17 shows the number of hatched larvae after immersion of Gr cysts in a tomato root exudate solution obtained from hydroponic cultivation.
[Figure 18] Figure 18 shows the number of hatched larvae after immersion of Gp cysts in a tomato root exudate solution obtained from hydroponic cultivation.

### DETAILED DESCRIPTION OF THE INVENTION

In the present specification, "nematode" refers to animals belonging to the phylum *Nematoda.* Nematodes include non-parasitic nematodes and parasitic nematodes. Plant-parasitic nematodes cause damage to crops. In the field of plant-parasitic nematology, research is conducted on nematodes that parasitize plants. In the present specification, "plant-parasitic nematodes" refers to nematodes that parasitize plants. Some nematodes are known to form cysts (nematodes of the family Heteroderidae; also referred to as "cyst nematodes"). Examples include soybean cyst nematode *(Heterodera glycines),* sugar beet cyst nematode *(Heterodera schachtii),* potato cyst nematode *(Globodera rostochiensis),* clover cyst nematode *(Heterodera trifolii),* and pale potato cyst nematode *(Globodera pallida),* all of which are nematodes that form cysts. The potato cyst nematode and the pale potato cyst nematode selectively parasitize plants of the genus *Chenopodium* and the genus *Solanaceae* plants (e.g., chili pepper, potato, tomato). The soybean cyst nematode selectively parasitizes leguminous plants such as soybean, adzuki bean, and common bean. The clover cyst nematode parasitizes *Caryophyllaceae* plants such as carnation.

In the present specification, "cyst" refers to a capsule containing eggs. Female cyst nematodes die while enclosing hundreds of eggs, and their bodies form cysts that contain the eggs. Cysts are generally resistant to pesticides and other agents.

In the present specification, "effective concentration" refers to a concentration at which the defined hatching-promoting substance exhibits its intended effect. The intended effect of the hatching-promoting substance is typically the promotion of hatching from cysts of plant-parasitic nematodes, particularly cyst nematodes.

In the present specification, "hatching" means hatching from nematode eggs. Hatching may occur from eggs within cysts or from eggs outside cysts.

In the present specification, "hatching-promoting substance" refers to a substance that promotes hatching of nematode eggs compared to a negative control (e.g., water, distilled water, or pure water). The hatching-promoting substance may be a substance that promotes hatching of nematode eggs outside cysts compared to a negative control (e.g., water, distilled water, or pure water). Preferably, the hatching-promoting substance is a substance that promotes hatching of nematode eggs within or from cysts compared to a negative control (e.g., physiological saline, water, distilled water, or pure water). The hatching-promoting substance is used on soil. The soil may be farmland, particularly fields (preferably fields of *Solanaceae* plants such as potato, tomato, or chili pepper). The hatching-promoting substance is typically a synthetic or isolated substance. The hatching-promoting substance may be a substance that promotes hatching of nematode eggs outside cysts more strongly than a positive control (e.g., one of the hatching-promoting substances described in this specification).

According to the present disclosure, there is provided a method for promoting the hatching of nematodes, comprising contacting an effective concentration of a hatching-promoting substance with eggs of the nematodes. According to the present disclosure, there is also provided a method for promoting the hatching of nematodes, comprising contacting an effective concentration of a hatching-promoting substance with cysts of the nematodes. According to the method of the present disclosure, eggs of nematodes (e.g., eggs contained in cysts) may hatch upon such contact with the hatching-promoting substance. The method may be carried out, for example, in soil (e.g., soil of farmland, such as fields). The soil in which the method of the present disclosure is carried out may contain cysts of nematodes or may be determined to contain such cysts. As described later, permeating water into the cysts from outside can promote hatching of nematodes from eggs contained in the cysts. Therefore, the method may be performed on soil during periods when the soil is moistened by water, such as on rainy days or within 1, 2, or 3 days after a rainy day.

The hatching-promoting substance may comprise one or more selected from the group consisting of metal ions, salts of metal ions, metal oxides, chelated metals, chelating agents, plant extracts, fertilizers, neurotransmission-related compounds, metabolism-regulating factors, amino acids, and sulfur compounds.

Examples of the metal ion include, for example, ferric ion and zinc ion. The metal ion may be in an ionized form or in the form of a salt of the metal ion.

Examples of the salt of the metal ion include inorganic salts and organic salts of the metal ion. Examples of the inorganic salt of the metal ion include, for example, sulfate, ammonium sulfate (Mohr's salt), hydrogen sulfate salt, chloride salt, bromide salt, iodide salt, nitrate salt, phosphate salt, carbonate salt, bicarbonate salt, perchlorate salt, hydroxide salt, and oxyhydroxide salt. Examples of the organic salt of the ferric ion include, for example, formate salt, acetate salt, propionate salt, butyrate salt, oxalate salt, acrylate salt, methacrylate salt, citrate salt, ammonium citrate salt, pyrophosphate salt, and para-toluenesulfonate salt. The salt of the metal ion may be a single compound or a combination or mixture of two or more.

Examples of the metal oxide include ferric oxide and zinc oxide. Preferably, the ferric oxide is ferrous oxide.

A chelated metal refers to a metal in a state chelated with a chelating agent. Chelation with a chelating agent may increase the water solubility of the metal or enhance its absorbability into cells. The chelating agent is not particularly limited as long as it can chelate a metal or a metal ion, and examples include humic acid, ethylenediaminetetraacetic acid (EDTA), ethylenediaminediacetic acid, nitrilotriacetic acid, glutamic acid-N,N-diacetic acid, aspartic acid-N,N-diacetic acid, glycine, alanine, acetic acid, oxalic acid, malonic acid, succinic acid, glutaric acid, adipic acid, salicylic acid, citric acid, lactic acid, glycolic acid, malic acid, tartaric acid, mandelic acid, suberic acid, sebacic acid, decanedioic acid, phosphoric acid, pyrophosphoric acid, hexametaphosphoric acid, hexylphosphonic acid, octylphosphonic acid, nitrilotriacetic acid, 1-hydroxyethane-1,1-diphosphonic acid, 1-hydroxyethane-1,1-diphosphonate, thiodiglycolic acid, thiodipropionic acid, thiodibutyric acid, propyldithiodiglycolic acid, butyldithiodiglycolic acid, butyldithiodipropionic acid, ethyldithiodibutyric acid, glycol ether diamine tetraacetic acid, 1,10-phenanthroline, siderophores (e.g., catechol-type siderophores, hydroxamate-type siderophores), and salts thereof. The chelated metal may be formed using the metals described above. The chelated metal may consist of a single compound or may be a combination or mixture of two or more.

Examples of alkaline earth metals include calcium and magnesium. The alkaline earth metal ion may be calcium ion or magnesium ion. The alkaline earth metal ion may be in an ionized form or in the form of a salt. The salt may be one or more selected from the group consisting of the above-mentioned organic and inorganic salts. The chelating agent included in the chelated alkaline earth metal may be one or more selected from the chelating agents described above.

The plant extract is a fraction obtained by extracting from the whole or part of a plant. The plant may be, for example, a *Solanaceae* plant such as potato, tomato, or eggplant. The plant may also be one or more selected from the group consisting of the genus *Nicotiana* (e.g., tobacco), the genus *Capsicum* (e.g., chili pepper), the genus *Piper* (black pepper), pulp of the genus *Beta* (e.g., beet pulp), and the genus *Solanum (e.g.,* tomato). The part of the plant may be one or more parts selected from the group consisting of fruit, stem, leaf, and root. The plant extract may be one or more selected from the group consisting of tobacco leaves, chili pepper fruits, black pepper fruits, beet pulp, and tomato leaves.

The neurotransmission-related compound may be, for example, α-chaconine.

The metabolism-regulating factor may be one or more selected from the group consisting of vitamins (e.g., vitamin B1, vitamin C), nucleic acids (e.g., ribonucleotides, deoxyribonucleotides, such as 5-aminoimidazole-4-carboxamide ribonucleotide (AICAR)), intermediates of the glycolytic pathway (e.g., glucose, glucose-6-phosphate, fructose-6-phosphate, fructose-1,6-bisphosphate, dihydroxyacetone phosphate, glyceraldehyde-3-phosphate, 1,3-bisphosphoglycerate, 3-phosphoglycerate, 2-phosphoglycerate, phosphoenolpyruvate, and pyruvate), and intermediates of the citric acid cycle (e.g., oxaloacetic acid, citric acid, aconitic acid, D-isocitric acid, α-ketoglutaric acid, succinyl-CoA, succinic acid, fumaric acid, and L-malic acid).

The amino acid may be one or more selected from the group consisting of isoleucine, leucine, lysine, methionine, phenylalanine, threonine, tryptophan, valine, histidine, tyrosine, cysteine, aspartic acid, asparagine, serine, glutamic acid, glutamine, proline, glycine, alanine, and arginine. The amino acid may be, for example, an acidic amino acid such as aspartic acid and glutamic acid.

The sulfur compound may be, for example, halotrichite. The sulfur compound may be contained in yunohana (hot spring mineral deposit), and the form of the sulfur compound as contained in yunohana may be used.

The composition comprising the hatching-promoting substance according to the present disclosure may further comprise a substance for enhancing the sustained release property of the hatching-promoting substance. Examples of the substance for enhancing sustained release include biodegradable polymers (e.g., bio-based polymers such as humic acid or humic substances), natural resins, porous materials, synthetic resins, and inorganic carriers.

According to the present disclosure, waste solution from hydroponic cultivation of *Solanaceae* plants (e.g., including root exudates) can promote the hatching of nematodes from eggs within cysts. According to the present disclosure, the hatching of cyst nematodes can be promoted by combining the hatching-promoting substance of the present disclosure with waste solution from hydroponic cultivation of *Solanaceae* plants (e.g., including root exudates). Specifically, hatching of cyst nematodes can be promoted by combining the hatching-promoting substance of the present disclosure with waste solution from tomato hydroponic cultivation or recirculating tomato hydroponic cultivation (e.g., including root exudates). According to the present disclosure, hatching of cyst nematodes in the soil (e.g., soil including root exudates) of fields where *Solanaceae* plants (e.g., other than potato) have been cultivated can be promoted using the hatching-promoting substance of the present disclosure, and preferably, hatching of cyst nematodes may be promoted under rainy conditions using the hatching-promoting substance of the present disclosure. Further, by contacting cysts with a solution in which the solvent of the hatching-promoting substance is waste solution from hydroponic cultivation of Solanaceae plants, the hatching of cyst nematodes can also be promoted.

According to the present disclosure, a method is provided for permeating moisture into cysts of cyst nematodes. The method of the present disclosure comprises contacting or immersing cysts of cyst nematodes with a sufficient amount of moisture for a sufficient period of time. In this method, permeation of water into the cysts may change the cyst nematodes into a state in which hatching from the eggs contained in the cysts is facilitated, and/or may enhance the sensitivity of the eggs of the cyst nematodes to hatching-promoting substances. Therefore, this method may be performed as a preliminary step prior to the treatment of cysts with hatching-promoting substances, or may serve as a pretreatment for the treatment of cysts with hatching-promoting substances. The water is not particularly limited, and may be distilled water. The method may be carried out, for example, in a laboratory or *in vitro* (e.g., within a test container such as a test tube or microtube).

The water may have an electrical conductivity of, for example, 150 µS/cm or less, 100 µS/cm or less, 50 µS/cm or less, 10 µS/cm or less, 5 µS/cm or less, 4 µS/cm or less, 3 µS/cm or less, 2 µS/cm or less, 1 µS/cm or less, or 0.054 µS/cm or more. The water may have an electrical conductivity of, for example, from 5 µS/cm to 50 µS/cm. The water may also have an electrical conductivity of, for example, from 0.054 µS/cm to 2 µS/cm. The electrical conductivity may be measured at 25°C under atmospheric pressure.

According to the present disclosure, a method is provided for promoting the hatching of cyst nematodes, comprising
permeating moisture into cysts of cyst nematodes, and
contacting eggs of the cyst nematodes, which are taken out from the cysts, with an effective concentration of a hatching-promoting substance. According to the present disclosure, a hatching-promoting substance for use in such a method is also provided.

According to the present disclosure, a method is provided for screening hatching-promoting substances for cyst nematodes, comprising
providing cysts into which moisture has been permeated, and
contacting candidate hatching-promoting substances with eggs taken out from the cysts into which moisture has been permeated.

The cysts into which moisture has been permeated can be obtained by contacting moisture with the cysts of cyst nematodes under conditions suitable for the cysts.

It is considered that eggs of cyst nematodes can acquire resistance to hatching-promoting substances when they are exposed to water suddenly. In contrast, according to the present disclosure, eggs taken out from cysts into which moisture has been permeated exhibit higher responsiveness to hatching-promoting substances than eggs taken out from cysts before moisture permeation. By permeating water into cysts from the outside, sudden contact of the eggs with water can be avoided, the eggs can be brought into a state more susceptible to hatching, and acquisition of resistance to hatching-promoting substances can be prevented. Dispensing nematode eggs into wells is generally easier than dispensing cysts. In general, dispensing cysts requires transferring them one by one with tweezers to ensure a constant number of eggs per well, whereas eggs can be dispensed in a fixed volume of suspension into each well, allowing for even distribution. Therefore, eggs taken from cysts into which moisture has been permeated may be advantageous for screening of hatching-promoting substances. The present disclosure thus provides nematode eggs in a hatching-prone state (preferably isolated eggs) obtained from cysts into which water has been permeated from outside, as well as aqueous solutions containing such eggs. Candidate hatching-promoting substances may be, for example, natural products, extracts of natural products, plants, parts of plants, extracts of plants or their parts, or plant-derived components (e.g., proteins, lipids, fibers, cells, nucleic acids, etc.). The candidate hatching-promoting substances may comprise one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.

The screening method of the present disclosure may further include selecting a test substance that promotes hatching of nematodes from eggs in comparison to a negative control. Examples of the negative control include physiological saline, water, distilled water, and pure water.

According to the present disclosure, a composition for use in promoting hatching is provided, which comprises one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds. The composition for use in promoting hatching promotes hatching of nematodes from cysts or eggs of cyst nematodes (particularly *Globodera pallida* and *Globodera rostochiensis).*

According to the present disclosure, a method for improving soil contaminated with cysts or eggs of cyst nematodes (or a method for reducing the amount of cysts in the soil) is provided, comprising: contacting one or more effective amounts of the above-mentioned hatching-promoting substances with the cysts or eggs of cyst nematodes, thereby causing hatching of cyst nematodes from the cysts or eggs. The method of the present disclosure may be carried out in the absence of plants that cyst nematodes can parasitize. In the method of the present disclosure, the cysts may have moisture permeated therein or may be in a dried state. The method of the present disclosure may further include confirming the hatching of cyst nematodes. The method of the present disclosure may further include confirming the death of the cyst nematodes. The removal of cysts of cyst nematodes from the soil constitutes improvement of the soil. By improving the soil, for example, *Solanaceae* plants can be preferably cultivated in the soil without being harmed by cyst nematodes. Harms caused by cyst nematode parasitism include weakening of growth (chlorosis) and wilting of the plants. Plants parasitized by cyst nematodes may exhibit one or more symptoms selected from the group consisting of root system reduction, water stress, and nutrient deficiency, and may also show accelerated aging or increased susceptibility to fungal infection. The method of the present disclosure may or may not include determining whether the soil contains cysts prior to contacting the hatching-promoting substance with the soil. According to the present disclosure, a hatching-promoting substance for use in such a method is provided.

According to the present disclosure, a method is provided for treating agricultural products contaminated with cysts or eggs of cyst nematodes (e.g., *Solanaceae* harvests in the case of *Globodera pallida* and *Globodera rostochiensis;* legume harvests such as soybean, adzuki bean, and common bean in the case of *Heterodera glycines; Beta* or *Brassica* crops such as sugar beet in the case of *Heterodera schachtii;* and *Caryophyllaceae* harvests such as carnation in the case of *Heterodera trifolii),* comprising: contacting the agricultural product with one or more effective amounts of the above-mentioned hatching-promoting substances, thereby hatching cyst nematodes from the cysts or eggs. The method of the present disclosure may further include washing the agricultural product or contacting it with a pesticide. The agricultural product may be, for example, a crop. According to the present disclosure, a hatching-promoting substance for use in such a method is provided.

According to the present disclosure, a method is provided for cultivating crops, comprising: contacting a hatching-promoting substance with soil contaminated with cysts or eggs of cyst nematodes; and cultivating crops in the soil. By contacting the hatching-promoting substance with soil contaminated with cysts or eggs of cyst nematodes, the cyst nematodes can be caused to hatch. The crops may be, for example, agricultural products that are not susceptible to parasitism. Since no host crop is present nearby, the hatched cyst nematodes cannot parasitize and will starve to death. By doing so, the possibility that cyst nematodes are no longer present in the soil when cultivating susceptible crops thereafter can be increased, or the amount of cyst nematodes in the soil can be reduced, or the nematodes can be removed-for example, to a level that does not cause crop damage. According to the present disclosure, a hatching-promoting substance for use in such a method is provided.

According to the present disclosure, a method is provided for cultivating crops, comprising:
contacting a hatching-promoting substance with soil contaminated with cysts or eggs of cyst nematodes;
killing the hatched cyst nematodes in the presence or absence of a first agricultural product that is not susceptible to parasitism; and
cultivating a second crop after confirming the death of the cyst nematodes. The second crop may be of a plant species that is susceptible or not susceptible to cyst nematodes. According to the present disclosure, a hatching-promoting substance for use in such a method is provided.

### EXAMPLES

### Example 1: Effect of test substances on promotion of hatching of nematode cysts

Cyst nematodes persist in soil in the form of cysts with high stress resistance, hatch in response to the presence of crops, parasitize or infect the crops, and cause damage thereto. When the crops or their roots die, the nematodes survive in the soil as cysts.

To evaluate the hatching efficiency of nematodes, tomato root exudate was used as a positive control. The tomato root exudate was prepared as follows. Seedlings of *Solanum lycopersicum* cultivar "Home Momotaro" (registered trademark; Takii Seed Co., Ltd.) were planted in Wagner pots (1/5000 a) and cultivated for 30 days. A rubber stopper was inserted into each Wagner pot, and 1 L of distilled water was poured in. After 3 hours, the stoppers were removed, and the drainage was collected. The drainage was filtered through filter paper (No. 101, Advantec Toyo Co., Ltd.), and the filtrate was collected. The filtrate was further pressure-filtered using a syringe filter (PES, 0.45 µm pore size, Hawach Scientific Co.). The final filtrate was used as the tomato root exudate. The exudate was dispensed into microtubes and stored frozen at -20°C until use. Eggs of cyst nematodes were provided. Eggs of cyst nematodes were prepared by crushing cysts on a sieve with a mesh opening of 250 µm, removing debris using a sieve with a mesh opening of 106 µm, and collecting eggs on a sieve with a mesh opening of 25 µm. The following four groups were prepared: Group 1: eggs only; Group 2: mixture of eggs and cyst shells; Group 3: damaged cysts; and Group 4: cysts immersed in tomato root exudate. Hatching rates were measured. The results were as follows: Group 1, 17.2%; Group 2, 9.4%; Group 3, 5.6%; and Group 4, approximately 100%. These results indicate that the decrease in hatching rate is not attributable to the presence of cyst shells.

Next, cysts were immersed in distilled water for approximately one week to allow gentle permeation of water into the cysts, and the cysts and eggs isolated from them were subjected to the same experiment as above. The hatching rate from cysts was approximately 80%, and the hatching rate from eggs was also approximately 80%. It was thus revealed that immersion of cysts in water enhances the hatching rate of the eggs. When cysts are used in screening tests, it is necessary to pick up cysts one by one with tweezers and equalize the number of cysts in each test well. In contrast, when eggs isolated from cysts are used, the number of eggs per well can be standardized by dispensing a fixed volume of the egg suspension. Therefore, a screening system using eggs is more practical than one using cysts.

Next, in this example, substances capable of promoting hatching of cyst nematodes were explored. The cyst nematodes used were *Globodera pallida* (Gp) and *Globodera rostochiensis* (Gr). The cysts were immersed in distilled water beginning one week prior to the start of the experiment. Four cysts were seeded into each well (containing 50 µL of distilled water) of a 96-well plate. Distilled water was used as a negative control, and tomato root exudate was used as a positive control. Test substances were dissolved in distilled water before application. The upper openings of the wells were sealed with plate seals, and the plates were incubated statically at 20°C. The number of hatched larvae in each well was counted every seven days.

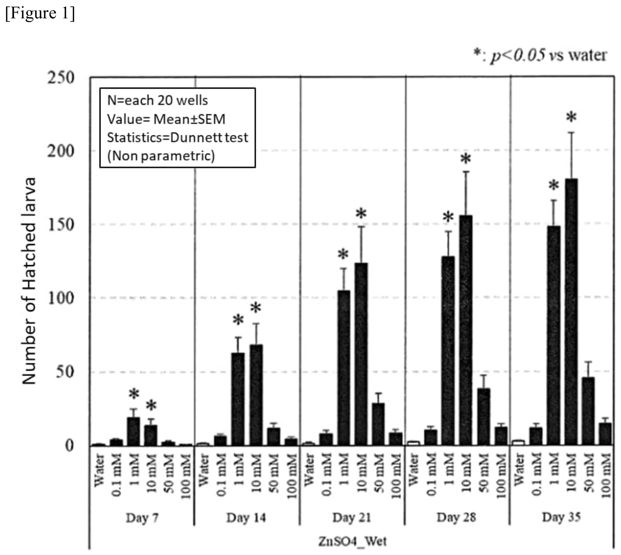

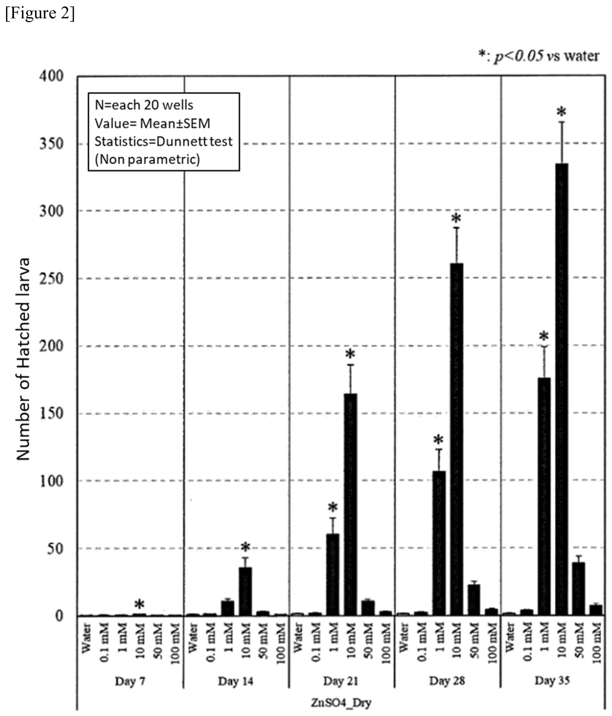

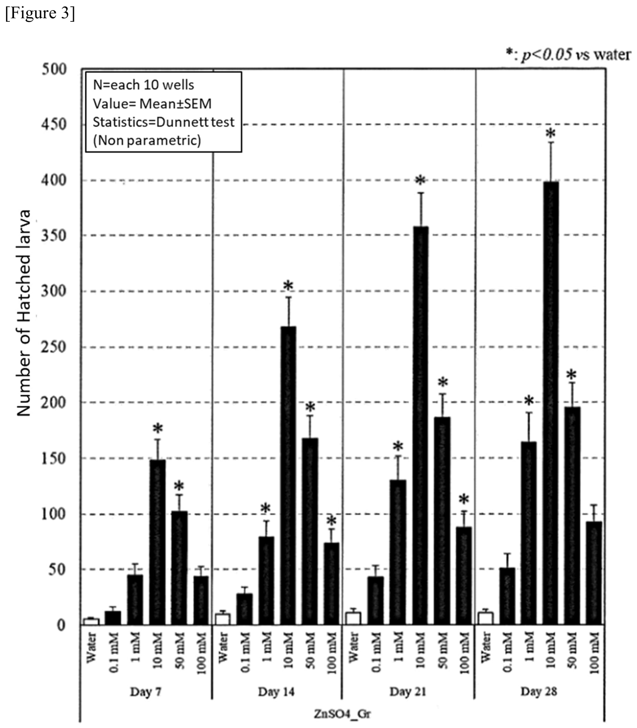

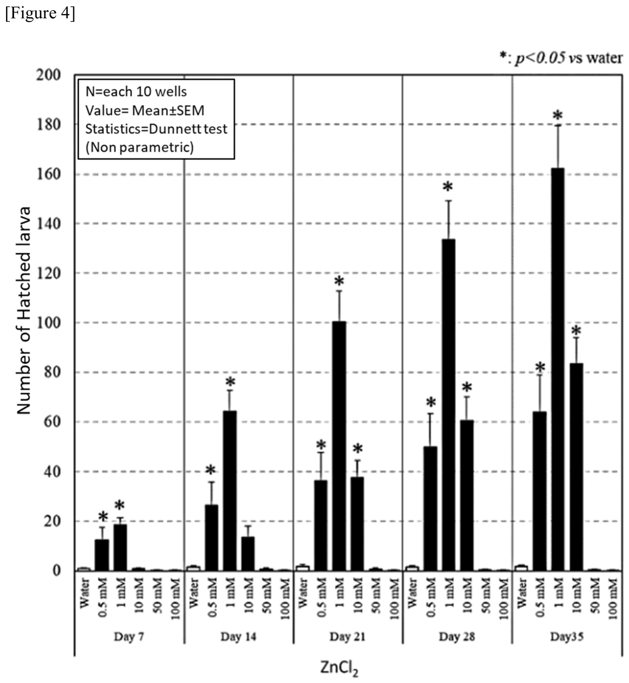

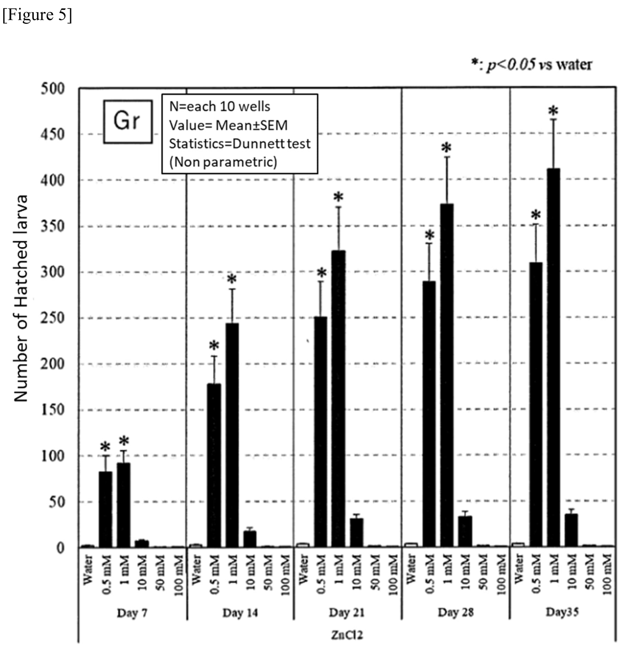

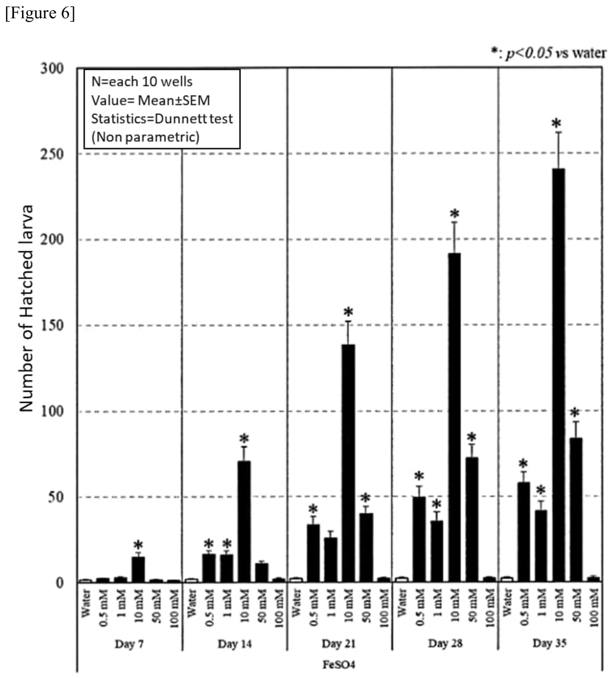

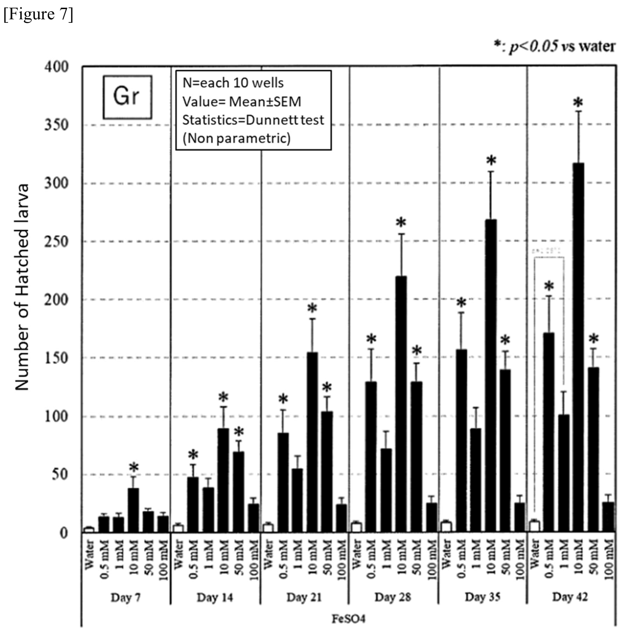

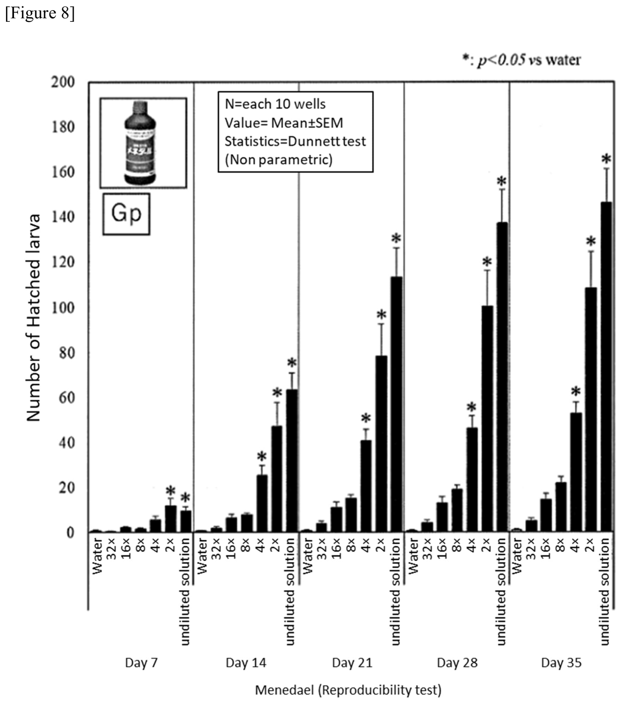

As shown in Figures 1 to 8, a variety of substances-such as metal ions, divalent ion chelators, plant extracts, fertilizers, neurotransmission-related compounds, metabolism-regulating factors, amino acids, and yunohana-promoted the hatching of cyst nematodes.

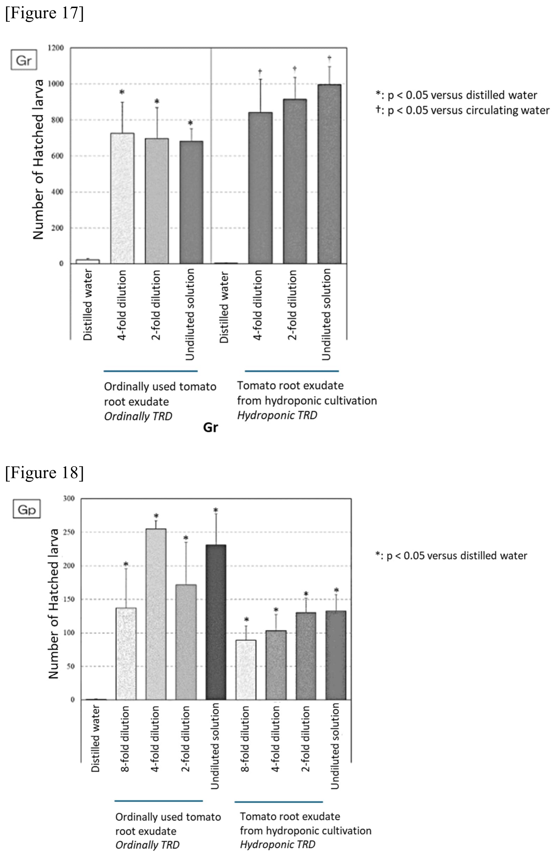

Root exudates were collected from tomato plants grown in soil or hydroponically. Cysts of nematodes were immersed in either undiluted or diluted root exudates, and the number of hatched larvae from eggs within the cysts was counted. In Figure 17, "circulating water" refers to the nutrient solution before it was circulated through the tomato hydroponic cultivation system. As shown in Figure 17 (Gr) and Figure 18 (Gp), the root exudate from hydroponically cultivated tomatoes promoted the hatching of nematodes.

## Claims

1. A method for promoting hatching of nematodes, comprising:
contacting an effective concentration of a hatching-promoting substance with eggs of the nematodes (or with cysts when the nematodes form cysts),
wherein the hatching-promoting substance comprises one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.

2. The method according to Claim 1,
wherein the hatching-promoting substance comprises a metal ion,
and the metal ion is one or more selected from the group consisting of ferric ion and zinc ion.

3. The method according to Claim 1,
wherein the hatching-promoting substance comprises a chelated metal,
and the chelated metal is one or more selected from the group consisting of chelated iron and chelated zinc.

4. The method according to Claim 1,
wherein the hatching-promoting substance comprises a plant extract, and the plant extract is one or more selected from the group consisting of tobacco extract, chili pepper extract, black pepper extract, beet pulp extract, and tomato leaf extract.

5. The method according to Claim 1,
wherein the hatching-promoting substance comprises an alkaline earth metal, and the alkaline earth metal includes calcium ion.

6. The method according to Claim 1,
wherein the hatching-promoting substance comprises a neurotransmission-related compound, and the neurotransmission-related compound includes α-chaconine.

7. The method according to Claim 1,
wherein the hatching-promoting substance comprises a metabolism-regulating factor, and the metabolism-regulating factor is one or more selected from the group consisting of 5-aminoimidazole-4-carboxamide ribonucleotide (AICAR), 5-aminolevulinic acid, vitamin C, citric acid, α-ketoglutaric acid, and vitamin B1.

8. The method according to[Claim 1,
wherein the hatching-promoting substance comprises an amino acid, and the amino acid is an acidic amino acid.

9. The method according to Claim 1,
wherein the hatching-promoting substance comprises a sulfur compound, and the sulfur compound includes halotrichite.

10. A composition for use in promoting hatching of cyst nematodes, comprising one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.

11. A method for improving the hatching efficiency of cyst nematodes, comprising permeating water from outside into cysts containing eggs of cyst nematodes.

12. A method for promoting hatching of cyst nematodes, comprising:
permeating moisture into cysts of cyst nematodes, and
contacting eggs of the cyst nematodes, which are isolated from said cysts, with an effective concentration of a hatching-promoting substance,
wherein the hatching-promoting substance comprises one or more selected from the group consisting of metal ions, salts of metal ions, metal oxides, alkaline earth metal ions, salts of alkaline earth metal ions, chelated metals, chelated alkaline earth metals, plant extracts, neurotransmission-related compounds, metabolism-regulating factors, amino acids, and sulfur compounds.

13. A method for screening a substance for promoting hatching of cyst nematodes, comprising:
contacting a test substance with eggs of cyst nematodes, which are isolated from cysts into which moisture has been permeated, and
selecting a test substance that promotes hatching of nematodes from eggs in comparison to a negative control.

14. Nematode eggs in a hatching-prone state, obtained from cysts into which water has been permeated from the outside and isolated from the cysts.
